# EUROPEAN PATENT SPECIFICATION

(11) **EP 2 093 948 B1**
(45) Date of publication and mention of the grant of the patent: **13.09.2017**
(21) Application number: 08706636.1
(22) Date of filing: 03.02.2008
(51) Int. Cl.: H04L 29/06, H04L 12/701

(54) **METHOD,DEVICE AND SYSTEM FOR CONTROLLING RTCP HR REPORT**
VERFAHREN, GERÄT UND SYSTEM ZUR KONTROLLE DES RTC P-HR-BERICHTS
PROCÉDÉ, DISPOSITIF ET SYSTÈME POUR RÉGULER LE RAPPORT DU PROTOCOLE DE TRANSPORT EN TEMPS RÉEL HAUTE RÉSOLUTION

(30) Priority: 17.02.2007 CN 200710079926
(43) Date of publication of application: 26.08.2009
(73) Proprietor: Huawei Technologies Co., Ltd., Longgang District Shenzhen, Guangdong 518129 (CN)
(72) Inventor: LIN, Yangbo, Shenzhen Guangdong 518129 (CN)
(74) Representative: Isarpatent
(86) International application number: PCT/CN2008/070262
(87) International publication number: WO 2008/101429

(56) References cited:
- EP-A- 1 739 900
- EP-A- 2 096 791
- CN-A- 1 489 355
- CN-A- 1 494 317
- CN-A- 1 716 870
- US-B1- 6 704 311
- CLARK TELCHEMY INCORPORATED A PENDLETON NORTEL R KUMAR K CONNOR CISCO SYSTEMS G HUNT BT A: "RTCP HR - High Resolution VoIP Metrics Report Blocks; draft-clark-avt-rtcphr-02.txt" IETF STANDARD-WORKING-DRAFT, INTERNET ENGINEERING TASK FORCE, IETF, CH, no. 2, 1 June 2006 (2006-06-01), XP015045064 ISSN: 0000-0004
- ALBRECHT SCHWARZ ALCATEL GERMANY ET AL: "Work Item H.248 QoS - Considerations concerning RTCP HR from an H.248 perspective; D 310" ITU-T DRAFT STUDY PERIOD 2005-2008, INTERNATIONAL TELECOMMUNICATION UNION, GENEVA ; CH, vol. STUDY GROUP 16, 3 April 2006 (2006-04-03), pages 1-7, XP017408106

## Description

### FIELD OF THE TECHNOLOGY

The present invention relates to the field of wireless communications, and more particularly to a method, device, and system for controlling a Real-time Transport Control Protocol (RTCP) high resolution (HR) report.

### BACKGROUND OF THE INVENTION

Media Gateway Controller (MGC) and Media Gateway (MG) are two critical components in packet-based networks.

The Real-time Transport Protocol (RTP) is a transport protocol for real-time transport of media streams (including audio, video, data, and other multimedia streams) in IP networks. The Real-time Transport Control Protocol (RTCP) provides enhanced transport monitoring, control, and identification functions for the RTP. RTCP extended report (RTCP XR) is an extended packet type for transmitting Quality of Service (QoS) statistics information between a sender and a receiver of the RTCP. An RTCP XR packet is formed by a series of report blocks.

RTCP high resolution (RTCP HR) reports that are currently being developed are extended from the report block type in the RTCP XR, so as to support QoS monitoring of media stream services such as Voice over IP (VoIP) services for services requiring high resolutions and detailed metrics. Currently, the extended block types include "HR VoIP metrics report block" and "RTCP HR configuration block".

The structure of the RTCP HR report is described by taking an HR VoIP metrics report block as an example. The report block is formed by a header and a series of sub-blocks. The sub-blocks may include a basic loss/discard metrics sub-block, a burst/gap metrics sub-block, a playout metrics sub-block, a concealed seconds metrics sub-block, a delay and packet delay variation metrics sub-block, a call quality metrics sub-block, and a vendor specific extension sub-block. A map field in the header is configured to define sub-blocks that may actually appear in the report block from the above sub-blocks.

The RTCP HR report may be generated based on the combination of three measuring modes, namely, cumulative, interval, and alert modes, and three measuring positions, namely, locally generated, relayed from remote IP endpoint, and relayed from remote Ext endpoint. Such a combination is also called a report type.

An RTP system capable of generating, forwarding, and/or receiving an RTCP HR report may be any type of an RTP system capable of receiving an RTP packet, including an RTP end system, an RTP mixer, and an RTP translator.

The RTP end system and the RTP mixer can only generate and send an RTCP HR report, and cannot forward RTCP HR reports generated by other RTP systems. The RTP translator can not only forward an RTCP HR report generated by one RTP system to another RTP system, but also generate and send an RTCP HR report to other RTP systems.

The RTP translator has three reporting modes: End System Peering (ESP), Local Reporting (LR), and Global Reporting (GR) modes. The ESP mode means that the RTP translator forwards an RTCP report generated by one RTP end system to another RTP end system. The LR mode means that based on the ESP mode, the RTP translator measures and generates an RTCP report and sends the RTCP report to a source and/or destination RTP end system of an RTP associated with the RTCP report, but does not forward RTCP reports generated by other RTP translators. The GR mode means that based on the ESP mode, the RTP translator not only measures and generates an RTCP report and sends the RTCP report to a source and/or destination RTP end system of an RTP associated with the RTCP report, but also forwards an RTCP report generated by another RTP translator to a source and/or destination RTP end system of an RTP associated with the RTCP report.

Performance and resource overhead required by the reporting modes of the RTP translator is different. The overhead required by the ESP mode is the lowest, and the performance and resource overhead required by the GR mode is the highest. The RTP end system or the RTP mixer merely generates and sends the RTCP HR report, and thus does not require different performance and resource overheads as the RTP translator in different reporting modes.

An MG may serve as any of the above RTP systems and implement corresponding operations for generating and/or forwarding an RTCP HR report, which requires the MG to determine the reporting mode to be used and the type of the RTCP HR report to be generated, so as to reduce unnecessary performance and resource overhead. However, the existing technology is lack in corresponding control mechanisms that satisfy the requirement.

EP 2 096 791 A1 discloses a collection device which can perform a corresponding operation on the collection of HR reports about QoS according to the obtained control information for collecting HR reports about QoS.

CLARK TELCHEMY INCORPORATED A PENDLETON NORTEL R KUMAR K CONNOR CISCO SYSTEMS G HUNT BT A: "RTCP HR- High Resolution VoIP Metrics Report Blocks; draft-clark-avt-rtcphr-02.txt" defines several new block types to augment those defined in RFC3611 for use in Quality of Service reporting for Voice over IP. The new block types support the reporting of metrics to a higher resolution to support certain applications.

EP 1 739 900 A1 provides a method and a system for periodically acquiring the QoS of the media stream to enhance the capability of adjusting the micro QoS of each call.

### SUMMARY OF THE INVENTION

Accordingly, a method for controlling an RTCP HR report is provided in an embodiment of the present invention, which is used for indicating a reporting mode in which an MG, serving as an RTCP HR report device, works and an RTCP HR report that needs to be generated. The method includes the following steps.

The MG obtains an RTCP HR reporting mode according to reporting mode control information delivered by a Media Gateway Controller (MGC), wherein the reporting mode control information is contained in a RM property parameter; wherein: values of the RM property parameter comprise: end system peering (ESP), local reporting (LR), or global reporting (GR) modes.

The MG forwards an RTCP HR report according to the reporting mode; or generates and forwards an RTCP HR report according to the reporting mode, wherein the MG communicates with a Media Gateway Controller (MGC) though an H.248/MeGaCo protocol or an MGCP.

A method for controlling an RTCP HR report is provided in another embodiment of the present invention, which enables an MG to generate an RTCP HR report according to an indication. The method includes the following steps.

The MG obtains RTCP HR report generation control information delivered by a Media Gateway Controller (MGC); wherein the RTCP HR report generation control information is contained in a generated RTCP HR reports (GHRR) property parameter; wherein the value of the GHRR property parameter at lease comprises one element or unit, and each element or unit is configured to describe one or one type of RTCP HR reports that need to be generated, wherein at least one of the following information may be applied: a receiving name, an originating name, a report type, and a sub-block type.

The MG generates an RTCP HR report according to the RTCP HR report generation control information, wherein the MG communicates with the MGC through an H.248/MeGaCo protocol or an MGCP.

A system for controlling an RTCP HR report is provided in another embodiment of the present invention. The system includes more than one RTP system and an MG. The MG is configured to obtain RTCP HR reporting mode control information, generate an RTCP HR report according to the obtained RTCP HR reporting mode control information, and send the generated RTCP HR report to the RTP systems; and/or the MG is configured to obtain RTCP HR reporting mode control information, and forward an RTCP HR report between the RTP systems according to the obtained RTCP HR reporting mode control information.

An MG is further provided in an embodiment of the present invention. The MG includes a reporting mode control unit and a report sending/forwarding unit.

The reporting mode control unit is configured to receive RTCP HR reporting mode control information from an MGC, or store preset RTCP HR reporting mode control information, wherein the reporting mode control information is contained in a RM property parameter; wherein: values of the RM property parameter comprise: end system peering (ESP), local reporting (LR), or global reporting (GR) modes.

The report sending/forwarding unit is configured to forward an RTCP HR report from a first RTP system to a second RTP system according to the RTCP HR reporting mode control information from the reporting mode control unit, wherein the MG communicates with a Media Gateway Controller (MGC) though an H.248/MeGaCo protocol or an MGCP.

An MG is further provided in an embodiment of the present invention. The MG includes a report generation control unit and a report generation unit.

The report generation control unit is configured to receive RTCP HR report generation control information from an MGC.

The report generation unit is configured to generate an RTCP HR report according to the RTCP HR report generation control information from the report generation control unit, wherein the RTCP HR report generation control information is contained in a generated RTCP HR reports (GHRR) property parameter; wherein the value of the GHRR property parameter at lease comprises one element or unit, and each element or unit is configured to describe one or one type of RTCP HR reports that need to be generated, at least one of the following information may be applied: a receiving name, an originating name, a report type, and a sub-block type; wherein the MG communicates with the MGC though an H.248/MeGaCo protocol or an MGCP.

An MGC is further provided in an embodiment of the present invention. The MGC includes a reporting mode control unit, a control information generation unit, and a control information sending unit.

The reporting mode control unit is configured to store or generate a reporting mode property parameter and a corresponding MG ID, and send the reporting mode property parameter and the MG ID to the control information generation unit; wherein: values of the RM property parameter comprise: end system peering (ESP), local reporting (LR), or global reporting (GR) modes.

The control information generation unit is configured to generate a command request containing the reporting mode property parameter according to the reporting mode property parameter and the corresponding MG ID from the reporting mode control unit, and send the command request and the MG ID to the control information sending unit.

The control information sending unit is configured to send the received command request to an MG corresponding to the MG ID, wherein the MGC communicates with the MG through an H.248/MeGaCo protocol or an MGCP.

An MGC is further provided in an embodiment of the present invention. The MGC includes a report generation control unit, a control information generation unit, and a control information sending unit.

The report generation control unit is configured to store or generate a generated RTCP HR reports (GHRR) property parameter and a corresponding MG ID, and send the GHRR property parameter and the corresponding MG ID to the control information generation unit; wherein the value of the GHRR property parameter at lease comprises one element or unit, and each element or unit is configured to describe one or one type of RTCP HR reports that need to be generated, at least one of the following information may be applied: a receiving name, an originating name, a report type, and a sub-block type.

The control information generation unit is configured to generate a command request containing the GHRR property parameter according to the GHRR property parameter from the report generation control unit, and send the command request and the MG ID to the control information sending unit.

The control information sending unit is configured to send the received command request to an MG corresponding to the MG ID, wherein the MGC communicates with the MG though an H.248/MeGaCo protocol or an MGCP.
It can be seen from the above technical solutions that, RTCP HR reporting mode control information is delivered to the MG by the MGC or preset in the MG, and the MG determines an RTCP HR reporting mode thereof according to the RTCP HR reporting mode control information. Meanwhile, RTCP HR report generation control information is delivered to the MG by the MGC or preset in the MG, and the MG generates an RTCP HR report according to the RTCP HR report generation control information. In this way, the reporting mode in which the MG, serving as an RTCP HR report device, works, and the RTCP HR report that needs to be generated by the MG is determined. Through the present invention, the objective that the MG can server as an RTCP HR report generation and/or forwarding control mechanism required by any type of the RTP system is achieved.

### BRIEF DESCRIPTION OF THE DRAWINGS

The present invention will become better understood from the detailed description given herein below for illustration only, and thus are not limitative of the present invention, and wherein:
FIG. 1 is a schematic view of a networking structure formed by MGC and MG according to an embodiment of the present invention;
FIG. 2 is a flow chart of a process for delivering a reporting mode to an MG by an MGC according to an embodiment of the present invention;
FIG. 3 is a schematic view of an RTP connection according to another embodiment of the present invention;
FIG. 4 is a flow chart of a process for enabling an MGC to control an MG to generate an HR report according to the embodiment of present invention as shown in FIG. 3; and
FIG. 5 is a schematic structural view of a system according to an embodiment of the present invention.

### DETAILED DESCRIPTION OF THE EMBODIMENTS

In order to make the objective, technical solutions and advantages of the present invention more comprehensible, the present invention is further described in detail below with the accompanying drawings.

In an embodiment of the present invention, a reporting mode in which an MG serves as an RTCP HR report device and/or an RTCP report that needs to be generated are either explicitly indicated by an MGC or preset in the MG. The MG generates and/or forwards an RTCP HR report according to the indication or setting.

In order to make the specific embodiments of the present invention more comprehensible, an interaction method between the MG and the MGC is first introduced below.

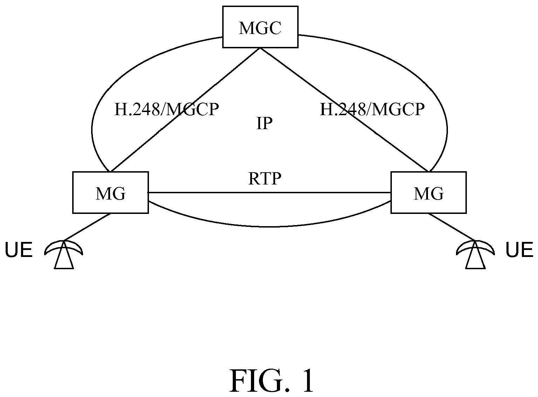

FIG. 1 shows a networking structure formed by MGC and MG. The MGC is responsible for a call control function, and the MG is responsible for a service bearer function, so as to realize the separation of a call control plane and a service bearer plane, thereby making full use of network resources, simplifying equipment upgrade and service expansion, and greatly reducing the cost of development and maintenance.

The media gateway control protocol (MGCP) or called gateway control protocol, is the main protocol for communication between an MGC and an MG. At present, the widely-used protocols include the H.248/MeGaCo protocol and the MGCP. For example, under the H.248 protocol, various resources in an MG are abstractly expressed as terminations, including physical terminations and ephemeral terminations. The former represents some semi-permanent physical entities, such as a time division multiplexing (TDM) channel, while the latter represents some public resources that are applied for temporary use and released after use, for example, an RTP media stream. In addition, a root termination is used to represent the whole MG. The combination of terminations is abstractly expressed as a context. The context may include a plurality of terminations, and thus the relationship among the terminations is expressed as a topology. A termination that has not been associated with other terminations is expressed as a special context called Null context.

Based on the above specification of the protocol, the connection of a call is actually a series of operations on terminations and contexts, and the operations are accomplished by request and reply commands between the MGC and the MG. The types of the commands include Add, Modify, Subtract, Move, AuditValue, AuditCapabilities, Notify, and ServiceChange. Command parameters, also known as descriptors, are classified into property, signal, event, and statistic. The service-related parameters are converged into a package logically.

In an embodiment of the present invention, a property parameter is extended in a command delivered to the MG by the MGC to describe a reporting mode in which the MG serves as an RTCP HR report device, and is, for example, named "reporting mode (RM)". This property parameter may be defined in an existing package or a new package.

The property parameter is of an enumeration type, and values of the property parameter include ESP, LR, and GR.

The ESP mode means that the MG forwards an RTCP HR report generated by one RTP end system to another RTP end system. The LR mode means that based on the ESP mode, the MG performs related functions of the ESP mode, measures and generates an RTCP HR report, and sends the RTCP HR report to a source and/or destination RTP end system of an RTP associated with the RTCP HR report, but does not forward RTCP HR reports generated by other RTP translators. The GR mode means that based on the ESP mode, the MG not only measures and generates an RTCP HR report and sends the RTCP HR report to a source and/or destination RTP end system of an RTP associated with the RTCP HR report, but also forwards an RTCP HR report generated by another RTP translator to a source and/or destination RTP end system of an RTP associated with the RTCP HR report.

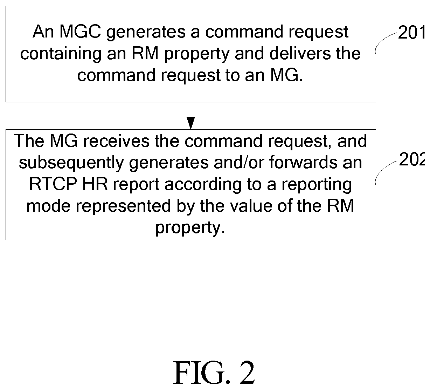

FIG. 2 is a flow chart of a process for delivering a reporting mode to an MG by an MGC according to the above embodiment of the present invention. The process includes the following steps.

In Step 201, an MGC generates a command request containing an RM property and delivers the command request to an MG. The command request may be obtained by adding an RM property parameter into an original Add, Modify, or Move command request, and may also be a newly defined command request. The value of the RM property may be ESP, LR, or GR.

In Step 202, the MG receives the command request and subsequently generates and/or forwards an RTCP HR report according to a reporting mode represented by the value of the RM property.

The RM property parameter may also be preset in the MG instead of being delivered by the MGC, and the MGC obtains a reporting mode in which the MG currently works by auditing the property.

The RM property parameter has a function of controlling the MG to determine a specific reporting mode of the RTCP HR report, and thus may also be called RTCP HR reporting mode control information.

In another embodiment of the present invention, a property parameter is extended in a command delivered to the MG by the MGC to describe a specific RTCP HR report that needs to be generated, and is, for example, named "generated RTCP HR reports (GHRR)". The property parameter may also be defined in an existing package or a new package.

The property parameter is of a string type, and is constituted by a series of elements or units. Each element or unit is configured to describe one or one type of RTCP HR reports that need to be generated, and is constituted by a receiving name, an originating name, a report type, and/or a sub-block type.

The receiving name refers to a canonical name or a portion of the canonical name (for example, a host name "X" in a canonical name in the form of a domain name "X@Y") of a destination RTP system of an RTP stream associated with the RTCP HR report. The originating name refers to a canonical name or a portion of the canonical name of a source RTP system of the RTP stream associated with the RTCP HR report. The report type refers to the combination of a measuring mode and/or a measuring position for generating the RTCP HR report. The sub-block type refers to the type of an RTCP HR sub-block contained in the RTCP HR report.

The above constituents may all or partially employ wildcards, for example, use "*" to represent "all". The constituents may all appear, or not appear. When none of the constituents appears, it represents a default value. For example, the default value is defined as "all".

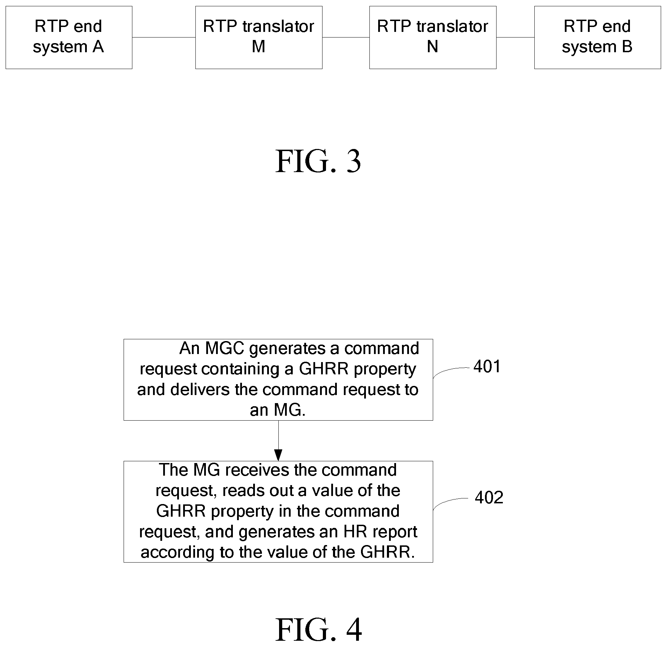

For example, for the RTP connection as shown in FIG. 3, if the locally generated cumulative metrics report is identified as 0, and the basic loss/discard metrics sub-block is corresponding to the least significant bit in a map field in the header of the RTCP HR report, {GHRR="B:A:0:1"} delivered by the MGC to the MG serving as an RTP translator M indicates that an RTP stream sent from an RTP end system A to an RTP end system B needs to be locally cumulated to generate an RTCP HR report of the basic loss/discard metrics, and {GHRR="A:B:*:* "} delivered by the MGC to the MG serving as an RTP translator N indicates that for an RTP stream sent from the RTP end system B to the RTP end system A, RTCP HR reports of all report types needs to be generated.

FIG. 4 is a flow chart of a process for enabling an MGC to control an MG to generate an HR report according to the above embodiment of the present invention. The process includes the following steps.

In Step 401, an MGC generates a command request containing a GHRR property and delivers the command request to an MG.

In Step 402, the MG receives the command request, reads out a value of the GHRR property in the command request, and generates an HR report according to the value of the GHRR.

The property parameter may also be preset in the MG instead of being delivered by the MGC. The MGC may also obtain RTCP HR reports that are currently being generated by the MG through auditing the property.

The property parameter has a function of controlling the content of the RTCP HR report generated by the MG, and thus may also be called RTCP HR report generation control information.

The two property parameters may be used in combination. For example, when the MG serves as an RTP translator, if the RM property parameter is set to be the ESP, the GHRR does not need to be set. If the RM property parameter is set to be the LR or GR, an RTCP HR report that needs to be generated may be further set through the GHRR. When the MG serves as an RTP end system or an RTP mixer, the RM property parameter does not need to be set, and an RTCP HR report that needs to be generated may be directly set through the GHRR.

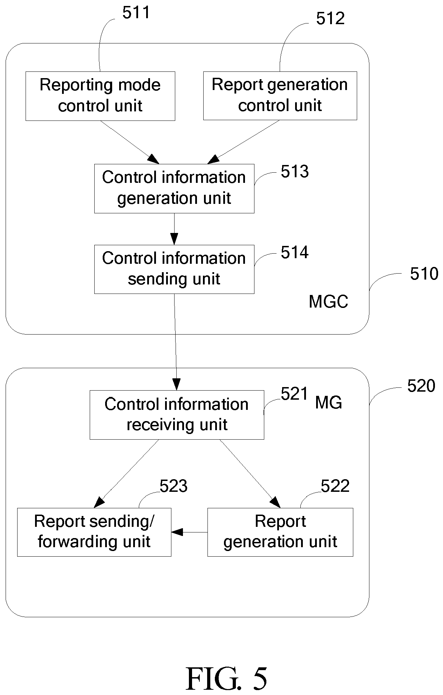

FIG. 5 shows a system according to an embodiment of the present invention. The system includes an MGC 510 and an MG 520. The MGC 510 is configured to generate RTCP HR reporting mode control information and/or RTCP HR report generation control information and deliver the generated control information to the MGC 520.

The MG 520 is configured to generate and/or forward an RTCP HR report according to the reporting mode control information delivered by the MGC 510; and/or the MGC 520 is configured to generate an RTCP HR report according to the RTCP HR report generation control information.

The MGC 510 further includes a reporting mode control unit 511, a report generation control unit 512, a control information generation unit 513, and a control information sending unit 514.

The reporting mode control unit 511 is configured to store RTCP HR reporting mode control information such as an RM property parameter and a corresponding MG ID, and send the stored control information to the control information generation unit 513.

The report generation control unit 512 is configured to store RTCP HR report generation control information such as a GHRR property parameter and a corresponding MG ID, and send the stored control information to the control information generation unit 513.

The control information generation unit 513 is configured to generate a command request containing the RM property parameter according to the RM property parameter and the corresponding MG ID from the reporting mode control unit 511, and send the command request and the MG ID to the control information sending unit 514; and configured to generate a command request containing the GHRR property parameter according to the GHRR property parameter from the report generation control unit 512, and send the command request and the MG ID to the control information sending unit 514.

The control information sending unit 514 is configured to send the received command request to an MG corresponding to the MG ID.

The MG 520 further includes a control information receiving unit 521, a report generation unit 522, and a report sending/forwarding unit 523.

The control information receiving unit 521 is configured to receive the command request from the MGC 510, extract the RM property parameter and/or the GHRR property parameter from the command request, send the GHRR property parameter to the report generation unit 522, and send the RM property parameter to the report sending/forwarding unit 523.

The report generation unit 522 is configured to generate an RTCP HR report according to the received GHRR property parameter, and send the generated RTCP HR report to the report sending/forwarding unit 523.

The report sending/forwarding unit 523 is configured to send the RTCP HR report from the report generation unit 522 to other RTP systems according to the indication of the RM property parameter, and/or forward an RTCP HR report from another RTP system to the other RTP systems according to the indication of the RM property parameter.

The MG 520 may also include a reporting mode control unit and/or a report generation unit (not shown in FIG. 5), so that the MG 520 does not need to receive the command request from the MGC, but instead, directly sends or forwards an RTCP HR report according to an RM property parameter in the reporting mode control unit thereof, and/or generates an RTCP HR report according to a GHRR property parameter in the report generation unit thereof.

Through the above description of the embodiments, it is apparent to those skilled in the art that the present invention may be accomplished by software on a necessary universal hardware platform, and definitely may also be accomplished by hardware. Therefore, the technical solutions of the present invention or the part that makes contributions to the existing technology can be substantially embodied in the form of a software product. The computer software product is stored in a storage medium, and contains several instructions to instruct a computer equipment (for example, a personal computer, a server, or a network equipment) to perform the method as described in the embodiments of the present invention.

It will be apparent to those skilled in the art that various modifications and variations can be made to the present invention without departing from the scope of the invention. In view of the foregoing, it is intended that the present invention cover modifications and variations of this invention provided they fall within the scope of the following claims and their equivalents.

## Claims

1. A method for controlling an Real-time Transport Control Protocol, RTCP, High Resolution, HR, report the method comprising:
obtaining, by a Media Gateway, MG, an RTCP HR Reporting Mode, RM, according to reporting mode control information delivered by a Media Gateway Controller, MGC, wherein the reporting mode control information is contained in a RM property parameter (202); wherein the MG communicates with the MGC through an H.248/Media Gateway Control, H.248/MeGaCo, protocol or a Media Gateway Control Protocol, MGCP, **characterized by**
forwarding, by the MG, an RTCP HR report according to the reporting mode; or generating and forwarding, by the MG, an RTCP HR report according to the reporting mode (202), wherein values of the RM property parameter comprise: end system peering, ESP, local reporting, LR, or global reporting, GR, modes.

2. The method according to claim 1, wherein
the step of forwarding comprises: forwarding, by the MG, an RTCP HR report generated by one Real-time Transport Protocol, RTP, end system to another RTP end system if the value of the RM property parameter is set to be ESP;
the step of generating and forwarding comprises: forwarding, by the MG, an RTCP HR report generated by one RTP end system to another RTP end system; or measuring and generating an RTCP HR report, and sending the RTCP HR report to a source and/or destination RTP end system of an RTP stream associated with the RTCP HR report if the value of the RM property parameter is set to be LR; and
the step of generating and forwarding comprises: forwarding, by the MG, an RTCP HR report generated by one RTP end system to another RTP end system; or measuring and generating an RTCP HR report, and sending the RTCP HR report to a source and/or destination RTP end system of an RTP stream associated with the RTCP HR report if the value of the RM property parameter is set to be GR; or forwarding an RTCP HR report generated by another RTP translator to a source and/or destination RTP end system of an RTP stream associated with the RTCP HR report.

3. The method according to any one of claims 1 and 2, wherein the method further comprises:
obtaining, by the MG, an RTCP HR report generation control information according to control information delivered by the MGC or preset in the MG; and
generating, by the MG, an RTCP HR report according to the RTCP HR report generation control information.

4. A method for controlling a Real-time Transport Control Protocol, RTCP, High Resolution, HR, report the method comprising:
obtaining, by a Media Gateway, MG, an RTCP HR report generation control information (402) according to the RTCP HR report generation control information delivered by a Media Gateway Controller, MGC, wherein the MG communicates with the MGC through an H.248/Media Gateway Control, H.248/MeGaCo, protocol or a Media Gateway Control Protocol, MGCP, **characterized by**
generating, by the MG, an RTCP HR report according to the RTCP HR report generation control information (402), wherein the RTCP HR report generation control information is contained in a generated RTCP HR reports, GHRR, property parameter; wherein the value of the GHRR property parameter at least comprises one element or unit, and each element or unit is configured to describe one or one type of RTCP HR reports that need to be generated, and is constituted by at least one of the following information: a receiving name, an originating name, a report type, and a sub-block type.

5. The method according to claim 4, wherein wildcards or default settings are used to represent the constituting information contained in the element or unit.

6. A Media Gateway, MG, wherein the MG comprises a reporting mode control unit and a report sending/forwarding unit, wherein:
the reporting mode control unit is configured to receive Real-Time Transport Control Protocol, RTCP, High Resolution, HR, reporting mode control information from a Media Gateway Controller, MGC, or store preset RTCP HR reporting mode control information, wherein the reporting mode control information is contained in a Reporting Mode, RM, property parameter, wherein the MG communicates with the MGC through an H.248/ Media Gateway Control, H.248/MeGaCo, protocol or a Media Gateway Control Protocol, MGCP, **characterized in that** values of the RM property parameter comprise: end system peering, ESP, local reporting, LR, or global reporting, GR, modes; and **in that**
the report sending/forwarding unit is configured to forward an RTCP HR report from a first Real-Time Transport Protocol, RTP, system to a second RTP system according to the RTCP HR reporting mode control information from the reporting mode control unit (523);

7. The MG according to claim 6, wherein the MG further comprises a report generation unit, and the report generation unit is configured to generate an RTCP HR report according to the RTCP HR reporting mode control information from the reporting mode control unit; and
the report sending/forwarding unit is configured to send the RTCP HR report generated by the report generation unit to a source and/or destination RTP end system of an RTP stream associated with the RTCP HR report (523).

8. A Media Gateway, MG, wherein the MG comprises a report generation control unit and a report generation unit, wherein:
the report generation control unit is configured to receive Real-Time Transport Control Protocol, RTCP, High Resolution, HR, report generation control information from a Media Gateway Controller, MGC, wherein the MG communicates with the MGC through an H.248/Media Gateway Control, H.248/MeGaCo, protocol or a Media Gateway Control Protocol, MGCP; and
**characterized in that**
the report generation unit is configured to generate an RTCP HR report according to the RTCP HR report generation control information from the report generation control unit (522); wherein the RTCP HR report generation control information is contained in a generated RTCP HR reports, GHRR, property parameter; wherein the value of the GHRR property parameter at least comprises one element or unit, and each element or unit is configured to describe one or one type of RTCP HR reports that need to be generated, and is constituted by at least one of the following information: a receiving name, an originating name, a report type, and a sub-block type;

9. A Media Gateway Controller, MGC, wherein the MGC comprises a reporting mode control unit, a control information generation unit, and a control information sending unit, wherein:
the reporting mode control unit is configured to store or generate a Reporting Mode , RM, property parameter and a corresponding Media Gateway, MG, Identifier, ID, and send the RM property parameter and the MG ID to the control information generation unit (511), wherein the MGC communicates with the MG through an H.248/Media Gateway Control, H.248/MeGaCo, protocol or a Media Gateway Control Protocol, MGCP, **characterized in that** values of the RM property parameter comprise: end system peering, ESP, local reporting, LR, or global reporting, GR, modes; and **in that**
the control information generation unit is configured to generate a command request containing the RM property parameter according to the RM property parameter and the corresponding MG ID from the reporting mode control unit, and send the command request and the MG ID to the control information sending unit (513); and
the control information sending unit is configured to send the received command request to an MG corresponding to the MG ID (514);

10. A Media Gateway Controller, MGC, wherein the MGC comprises a report generation control unit, a control information generation unit, and a control information sending unit, wherein:
the report generation control unit is configured to store or generate a generated RTCP HR reports, GHRR, property parameter and a corresponding Media Gateway, MG, Identifier, ID, and send the GHRR property parameter and the corresponding MG ID to the control information generation unit (512), wherein the MGC communicates with the MG through an H.248/Media Gateway Control, H.248/MeGaCo, protocol or a Media Gateway Control Protocol, MGCP, **characterized in that** the value of the GHRR property parameter at least comprises one element or unit, and each element or unit is configured to describe one or one type of RTCP HR reports that need to be generated, and is constituted by at least one of the following information :
a receiving name, an originating name, a report type, and a sub-block type;
the control information generation unit is configured to generate a command request containing the GHRR property parameter according to the GHRR property parameter from the report generation control unit, and send the command request and the MG ID to the control information sending unit (513); and
the control information sending unit is configured to send the received command request to an MG corresponding to the MG ID (514).

## Patentansprüche

1. Verfahren zum Steuern eines Echtzeit-Transportsteuerprotokoll-Hochauflösungsberichts bzw. RTCP-HR-Berichts, wobei das Verfahren Folgendes umfasst:
Erhalten, durch ein Medien-Gateway, MG, eines RTCP-HR-Berichtsmodus bzw. RTCP-HR-RM gemäß Berichtsmodus-Steuerinformationen, die durch eine Medien-Gateway-Steuerung, MGC, geliefert werden, wobei die Berichtsmodus-Steuerinformationen in einem RM-Eigenschaftsparameter enthalten sind (202); wobei das MG mit der MGC über ein H.248/Medien-Gateway-Steuerungsprotokoll bzw. H.248/MeGaCo-Protokoll oder ein Medien-Gateway-Steuerungsprotokoll, MGCP, kommuniziert,
**gekennzeichnet durch**
Weiterleiten, durch das MG, eines RTCP-HR-Berichts gemäß dem Berichtsmodus; oder Erzeugen und Weiterleiten, durch das MG, eines RTCP-HR-Berichts gemäß dem Berichtsmodus (202), wobei Werte des RM-Eigenschaftsparameters einen Endsystem-"Peering"-Modus bzw. ESP-Modus, einen Modus für lokales Berichten bzw. LR-Modus oder einen Modus für globales Berichten bzw. GR-Modus umfassen.

2. Verfahren nach Anspruch 1, wobei
der Schritt des Weiterleitens Weiterleiten, durch das MG, eines RTCP-HR-Berichts, der durch ein Echtzeit-Transportprotokoll-Endsystem bzw. RTP-Endsystem erzeugt wird, zu einem anderen RTP-Endsystem, falls der Wert des RM-Eigenschaftsparameters auf ESP festgelegt wird, umfasst;
der Schritt des Erzeugens und Weiterleitens Weiterleiten, durch das MG, eines RTCP-HR-Berichts, der durch ein RTP-Endsystem erzeugt wird, zu einem anderen RTP-Endsystem; oder Messen und Erzeugen eines RTCP-HR-Berichts und Senden des RTCP-HR-Berichts zu einem Quellen- und/oder Ziel-RTP-Endsystem eines RTP-Stroms, der mit dem RTCP-HR-Bericht assoziiert ist, falls der Wert des RM-Eigenschaftsparameters auf LR festgelegt wird, umfasst; und
der Schritt des Erzeugens und Weiterleitens Weiterleiten, durch das MG, eines RTCP-HR-Berichts, der durch ein RTP-Endsystem erzeugt wird, zu einem anderen RTP-Endsystem; oder Messen und Erzeugen eines RTCP-HR-Berichts und Senden des RTCP-HR-Berichts zu einem Quellen- und/oder Ziel-RTP-Endsystem eines RTP-Stroms, der mit dem RTCP-HR-Bericht assoziiert ist, falls der Wert des RM-Eigenschaftsparameters auf GR festgelegt wird; oder Weiterleiten eines RTCP-HR-Berichts, der durch einen anderen RTP-Übersetzer erzeugt wird, zu einem Quellen- und/oder Ziel-RTP-Endsystem eines RTP-Stroms, der mit dem RTCP-HR-Bericht assoziiert ist, umfasst.

3. Verfahren nach einem der Ansprüche 1 und 2, wobei das Verfahren ferner Folgendes umfasst:
Erhalten, durch das MG, von RTCP-HR-Berichtserzeugungs-Steuerinformationen gemäß Steuerinformationen, die durch die MGC geliefert werden oder im MG voreingestellt sind; und
Erzeugen, durch das MG, eines RTCP-HR-Berichts gemäß der RTCP-HR-Berichtserzeugungs-Steuerinformation.

4. Verfahren zum Steuern eines Echtzeit-Transportsteuerprotokoll-Hochauflösungsberichts bzw. RTCP-HR-Berichts, wobei das Verfahren Folgendes umfasst:
Erhalten, durch ein Medien-Gateway, MG, von RTCP-HR-Berichtserzeugungs-Steuerinformationen (402) gemäß den RTCP-HR-Berichtserzeugungs-Steuerinformationen, die durch eine Medien-Gateway-Steuerung, MGC, geliefert werden, wobei das MG mit der MGC über ein H.248/Medien-Gateway-Steuerungsprotokoll bzw. H.248/MeGaCo-Protokoll oder ein Medien-Gateway-Steuerungsprotokoll, MGCP, kommuniziert,
**gekennzeichnet durch**
Erzeugen, durch das MG, eines RTCP-HR-Berichts gemäß den RTCP-HR-Berichtserzeugungs-Steuerinformationen (402), wobei die RTCP-HR-Berichtserzeugungs-Steuerinformationen in einem Eigenschaftsparameter eines erzeugten RTCP-HR-Berichts bzw. GHRR-Eigenschaftsparameter enthalten sind; wobei der Wert des GHRR-Eigenschaftsparameters mindestens ein Element oder eine Einheit umfasst, und jedes Element oder jede Einheit dazu konfiguriert ist, einen oder eine Art von RTCP-HR-Berichten zu beschreiben, der bzw. die erzeugt werden muss und aus mindestens einer der folgenden Informationen konstituiert ist: einem Empfangsnamen, einem Ursprungsnamen, einer Berichtart und einer Subblockart.

5. Verfahren nach Anspruch 4, wobei Platzhalter oder Standardeinstellungen zum Repräsentieren der konstituierten Informationen, die im Element oder in der Einheit enthalten sind, verwendet werden.

6. Medien-Gateway, MG, wobei das MG eine Berichtsmodus-Steuereinheit und eine Berichtssende-/-weiterleitungseinheit umfasst, wobei:
die Berichtsmodus-Steuereinheit dazu konfiguriert ist, Echtzeit-Transportsteuerprotokoll-Hochauflösungsberichtsmodus-Steuerinformationen bzw. RTCP-HR-Berichtsmodus-Steuerinformationen von einer Medien-Gateway-Steuerung, MGC, zu empfangen oder voreingestellte RTCP-HR-Berichtsmodus-Steuerinformationen zu speichern, wobei die Berichtsmodus-Steuerinformationen in einem Berichtsmodus-Eigenschaftsparameter bzw. RM-Eigenschaftsparameter enthalten sind; wobei das MG mit der MGC über ein H.248/Medien-Gateway-Steuerungsprotokoll bzw. H.248/MeGaCo-Protokoll oder ein Medien-Gateway-Steuerungsprotokoll, MGCP, kommuniziert,
**dadurch gekennzeichnet, dass** Werte des RM-Eigenschaftsparameters einen Endsystem-"Peering"-Modus bzw. ESP-Modus, einen Modus für lokales Berichten bzw. LR-Modus oder einen Modus für globales Berichten bzw. GR-Modus umfassen; und dass
die Berichtssende-/-weiterleitungseinheit dazu konfiguriert ist, einen RTCP-HR-Bericht von einem ersten Echtzeit-Transportprotokoll-System bzw. RTP-System zu einem zweiten RTP-System gemäß den RTCP-HR-Berichtsmodus-Steuerinformationen von der Berichtsmodus-Steuereinheit (523) weiterzuleiten.

7. MG nach Anspruch 6, wobei das MG ferner eine Berichtserzeugungseinheit umfasst und die Berichtserzeugungseinheit dazu konfiguriert ist, einen RTCP-HR-Bericht gemäß den RTCP-HR-Berichtsmodus-Steuerinformationen von der Berichtsmodus-Steuereinheit zu erzeugen; und
die Berichtssende-/-weiterleitungseinheit dazu konfiguriert ist, den RTCP-HR-Bericht, der durch die Berichtserzeugungseinheit erzeugt wird, zu einem Quellen- und/oder Ziel-RTP-Endsystem eines RTP-Stroms, der mit dem RTCP-HR-Bericht (523) assoziiert ist, zu senden.

8. Medien-Gateway, MG, wobei das MG eine Berichtserzeugungs-Steuereinheit und eine Berichtserzeugungseinheit umfasst, wobei:
die Berichtserzeugungs-Steuereinheit dazu konfiguriert ist, Echtzeit-Transportsteuerprotokoll-Hochauflösungsberichtserzeugungs-Steuerinformationen bzw. RTCP-HR-Berichtserzeugungs-Steuerinformationen von einer Medien-Gateway-Steuerung, MGC, zu empfangen, wobei das MG mit der MGC über ein H.248/Medien-Gateway-Steuerungsprotokoll bzw. H.248/MeGaCo-Protokoll oder ein Medien-Gateway-Steuerungsprotokoll, MGCP, kommuniziert; und
**dadurch gekennzeichnet, dass**
die Berichtserzeugungseinheit dazu konfiguriert ist, einen RTCP-HR-Bericht gemäß den RTCP-HR-Berichtserzeugungs-Steuerinformationen von der Berichtserzeugungs-Steuereinheit (522) zu erzeugen; wobei die RTCP-HR-Berichtserzeugungs-Steuerinformationen in einem Eigenschaftsparameter eines erzeugten RTCP-HR-Berichts bzw. GHRR-Eigenschaftsparameter enthalten sind; wobei der Wert des GHRR-Eigenschaftsparameters mindestens ein Element oder eine Einheit umfasst und jedes Element oder jede Einheit dazu konfiguriert ist, einen oder eine Art von RTCP-HR-Berichten, der bzw. die erzeugt werden muss, zu beschreiben und aus mindestens einer der folgenden Informationen konstituiert ist: einem Empfangsnamen, einem Ursprungsnamen, einer Berichtart und einer Subblockart.

9. Medien-Gateway-Steuerung, MGC, wobei die MGC eine Berichtsmodus-Steuereinheit, eine Steuerinformationen-Erzeugungseinheit und eine Steuerinformationen-Sendeeinheit umfasst, wobei:
die Berichtsmodus-Steuereinheit dazu konfiguriert ist, einen Berichtsmodus-Eigenschaftsparameter bzw. RM-Eigenschaftsparameter und eine entsprechende Medien-Gateway-Kennung bzw. MG-ID zu speichern oder zu erzeugen und den RM-Eigenschaftsparameter und die MG-ID zur Steuerinformationen-Erzeugungseinheit (511) zu senden, wobei die MGC mit dem MG über ein H.248/Medien-Gateway-Steuerungsprotokoll bzw. H.248/MeGaCo-Protokoll oder ein Medien-Gateway-Steuerungsprotokoll, MGCP, kommuniziert,
**dadurch gekennzeichnet, dass** Werte des RM-Eigenschaftsparameters einen Endsystem-"Peering"-Modus bzw. ESP-Modus, einen Modus für lokales Berichten bzw. LR-Modus oder einen Modus für globales Berichten bzw. GR-Modus umfassen; und dass
die Steuerinformationen-Erzeugungseinheit dazu konfiguriert ist, eine Befehlsanforderung, die den RM-Eigenschaftsparameter enthält, gemäß dem RM-Eigenschaftsparameter und der entsprechenden MG-ID von der Berichtsmodus-Steuereinheit zu erzeugen und die Befehlsanforderung und die MG-ID zur Steuerinformationen-Sendeeinheit (513) zu senden; und
die Steuerinformationen-Sendeeinheit dazu konfiguriert ist, die empfangene Befehlsanforderung zu einem MG, das der MG-ID (514) entspricht, zu senden.

10. Medien-Gateway-Steuerung, MGC, wobei die MGC eine Berichtserzeugungs-Steuereinheit, eine Steuerinformationen-Erzeugungseinheit und eine Steuerinformationen-Sendeeinheit umfasst, wobei:
die Berichtserzeugungs-Steuereinheit dazu konfiguriert ist, einen Eigenschaftsparameter eines erzeugten RTCP-HR-Berichts bzw. GHRR-Eigenschaftsparameter und eine entsprechende Medien-Gateway-Kennung bzw. MG-ID, zu speichern oder zu erzeugen und den GHRR-Eigenschaftsparameter und die entsprechende MG-ID zur Steuerinformationen-Erzeugungseinheit (512) zu senden, wobei die MGC mit dem MG über ein H.248/Medien-Gateway-Steuerungsprotokoll bzw. H.248/MeGaCo-Protokoll oder ein Medien-Gateway-Steuerungsprotokoll, MGCP, kommuniziert,
**dadurch gekennzeichnet, dass** der Wert des GHRR-Eigenschaftsparameters mindestens ein Element oder eine Einheit umfasst und jedes Element oder jede Einheit dazu konfiguriert ist, einen oder eine Art von RTCP-HR-Berichten, der bzw. die erzeugt werden muss, zu beschreiben und aus mindestens einer der folgenden Informationen konstituiert ist: einem Empfangsnamen, einem Ursprungsnamen, einer Berichtart und einer Subblockart;
die Steuerinformationen-Erzeugungseinheit dazu konfiguriert ist, eine Befehlsanforderung, die den GHRR-Eigenschaftsparameter enthält, gemäß dem GHRR-Eigenschaftsparameter von der Berichtserzeugungs-Steuereinheit zu erzeugen und die Befehlsanforderung und die MG-ID zur Steuerinformationen-Sendeeinheit (513) zu senden; und
die Steuerinformationen-Sendeeinheit dazu konfiguriert ist, die empfangene Befehlsanforderung zu einem MG, das der MG-ID (514) entspricht, zu senden.

## Revendications

1. Procédé pour commander un rapport de protocole de commande de transport en temps réel, RTCP, haute résolution, HR, le procédé comprenant :
obtenir, par une passerelle média, MG, un mode de rapport, RM, RTCP HR, selon des informations de commande de mode de rapport fournies par un contrôleur de passerelle média, MGC, dans lequel les informations de commande de mode de rapport sont contenues dans un paramètre de propriété RM (202) ; dans lequel la MG communique avec le MGC par l'intermédiaire d'un protocole H.248/commande de passerelle média, H.248/MeGaCo, ou d'un protocole de commande de passerelle média, MGCP,
**caractérisé par**
la transmission, par la MG, d'un rapport RTCP HR selon le mode de rapport ; ou la génération et la transmission, par la MG, d'un rapport RTCP HR selon le mode de rapport (202), dans lequel des valeurs du paramètre de propriété RM comprennent : des modes d'appairage de systèmes d'extrémité, ESP, de rapports locaux, LR, ou de rapports globaux, GR.

2. Procédé selon la revendication 1, dans lequel
l'étape de transmission comprend : transmettre, par la MG, un rapport RTCP HR généré par un système d'extrémité de protocole de transport en temps réel, RTP, à un autre système d'extrémité RTP si la valeur du paramètre de propriété RM est définie comme étant ESP ;
l'étape de génération et de transmission comprend : transmettre, par la MG, un rapport RTCP HR généré par un système d'extrémité RTP à un autre système d'extrémité RTP ; ou mesurer et générer un rapport RTCP HR, et envoyer le rapport RTCP HR à un système d'extrémité RTP de source et/ou de destination d'un flux RTP associé au rapport RTCP HR si la valeur du paramètre de propriété RM est définie comme étant LR ; et
l'étape de génération et de transmission comprend : transmettre, par la MG, un rapport RTCP HR généré par un système d'extrémité RTP à un autre système d'extrémité RTP ; ou mesurer et générer un rapport RTCP HR, et envoyer le rapport RTCP HR à un système d'extrémité RTP de source et/ou de destination d'un flux RTP associé au rapport RTCP HR si la valeur du paramètre de propriété RM est définie comme étant GR ; ou transmettre un rapport RTCP HR généré par un autre traducteur RTP à un système d'extrémité RTP de source et/ou de destination d'un flux RTP associé au rapport RTCP HR.

3. Procédé selon l'une quelconque des revendications 1 et 2, dans lequel le procédé comprend en outre :
obtenir, par la MG, des informations de commande de génération de rapport RTCP HR selon des informations de commande fournies par le MGC ou prédéfinies dans la MG;et
générer, par la MG, un rapport RTCP HR selon les informations de commande de génération de rapport RTCP HR.

4. Procédé pour commander un rapport de protocole de commande de transport en temps réel, RTCP, haute résolution, HR, le procédé comprenant :
obtenir, par une passerelle média, MG, des informations de commande de génération de rapport RTCP HR (402) selon les informations de commande de génération de rapport RTCP HR fournies par un contrôleur de passerelle média, MGC, dans lequel la MG communique avec le MGC en utilisant un protocole H.248/commande de passerelle média, H.248/MeGaCo, ou un protocole de commande de passerelle média, MGCP,
**caractérisé par**
la génération, par la MG, d'un rapport RTCP HR selon les informations de commande de génération de rapport RTCP HR (402), dans lequel les informations de commande de génération de rapport RTCP HR sont contenues dans un paramètre de propriété de rapport RTCP HR généré, GHRR ; dans lequel la valeur du paramètre de propriété GHRR comprend au moins un élément ou une unité, et chaque élément ou unité est configuré(e) pour décrire un ou un type de rapport RTCP HR qui doit être généré, et est constitué(e) par au moins l'une des informations suivantes : un nom de réception, un nom d'origine, un type de rapport, et un type de sous-bloc.

5. Procédé selon la revendication 4, dans lequel des caractères génériques ou des paramètres par défaut sont utilisés pour représenter les informations constitutives contenues dans l'élément ou l'unité.

6. Passerelle média, MG, dans laquelle la MG comprend une unité de commande de mode de rapport et une unité d'envoi/de renvoi de rapport, dans laquelle :
l'unité de commande du mode de rapport est configurée pour recevoir des informations de commande de mode de rapport de protocole de commande de transport en temps réel, RTCP, haute résolution, HR, à partir d'un contrôleur de passerelle média, MGC, ou stocker des informations de commande de mode de rapport RTCP HR prédéfinies, dans laquelle les informations de commande de mode de rapport sont contenues dans un paramètre de propriété de mode de rapport, RM, dans laquelle la MG communique avec le MGC en utilisant un protocole H.248/commande de passerelle média, H.248/MeGaCo ou un protocole de commande de passerelle média, MGCP,
**caractérisée en ce que** des valeurs du paramètre de propriété RM comprennent : des modes d'appairage de systèmes d'extrémité, ESP, de rapports locaux, LR, ou de rapports globaux, GR ; et **en ce que** l'unité d'envoi/de renvoi de rapport est configurée pour transmettre un rapport RTCP HR à partir d'un premier système de protocole de transport en temps réel, RTP, vers un second système RTP, selon les informations de commande du mode de rapport RTCP HR de l'unité de commande de mode de rapport (523).

7. MG selon la revendication 6, dans lequel la MG comprend en outre une unité de génération de rapport, et l'unité de génération de rapport est configurée pour générer un rapport RTCP HR selon les informations de commande de mode de rapport RTCP HR provenant de l'unité de commande de mode de rapport ; et
l'unité d'envoi/de renvoi de rapport est configurée pour envoyer le rapport RTCP HR généré par l'unité de génération de rapport à un système d'extrémité RTP de source et/ou de destination d'un flux RTP associé au rapport RTCP HR (523).

8. Passerelle média, MG, dans laquelle la MG comprend une unité de commande de génération de rapport et une unité de génération de rapport, dans laquelle :
l'unité de commande de génération de rapport est configurée pour recevoir des informations de commande de génération de rapport de protocole de commande de transport en temps réel, RTCP, haute résolution, HR, à partir d'un contrôleur de passerelle média, MGC, dans lequel la MG communique avec le MGC par l'intermédiaire d'un protocole H.248/commande de passerelle média, H.248/MeGaCo, ou d'un protocole de commande de passerelle média, MGCP, et
**caractérisée en ce que** l'unité de génération de rapport est configurée pour générer un rapport RTCP HR selon les informations de commande de génération de rapport RTCP HR provenant de l'unité de commande de génération de rapport (522) ; dans laquelle les informations de commande de génération de rapport RTCP HR sont contenues dans un paramètre de propriété de rapport RTCP HR généré, GHRR ; dans laquelle la valeur du paramètre de propriété GHRR comprend au moins un élément ou une unité, et chaque élément ou unité est configuré(e) pour décrire un ou un type de rapport RTCP HR qui doit être généré, et est constitué(e) par au moins l'une des informations suivantes : un nom de réception, un nom d'origine, un type de rapport, et un type de sous-bloc.

9. Contrôleur de passerelle média, MGC, dans lequel le MGC comprend une unité de commande de mode de rapport, une unité de génération d'informations de commande, et une unité d'envoi d'informations de commande, dans lequel :
l'unité de commande de mode de rapport est configurée pour stocker ou générer un paramètre de propriété de mode de rapport, RM, et un identificateur, ID, de passerelle média, MG, correspondant, et envoyer le paramètre de propriété RM et l'ID DE MG à l'unité de génération d'informations de commande (511), dans lequel le MGC communique avec la MG par l'intermédiaire d'un protocole H.248/commande de passerelle média, H.248/MeGaCo, ou d'un protocole de commande de passerelle média, MGCP,
**caractérisé en ce que** des valeurs du paramètre de propriété RM comprennent : des modes d'appairage de systèmes d'extrémité, ESP, de rapports locaux, LR, ou de rapports globaux, GR ; et **en ce que**
l'unité de génération d'informations de commande est configurée pour générer une demande de commande contenant le paramètre de propriété RM selon le paramètre de propriété RM et l'ID DE MG correspondant à partir de l'unité de commande de mode de rapport, et envoyer la demande de commande et l'ID DE MG à l'unité d'envoi d'informations de commande (513) ; et
l'unité d'envoi d'informations de commande est configurée pour envoyer la demande de commande reçue à une MG correspondant à l'ID DE MG (514).

10. Contrôleur de passerelle média, MGC, dans lequel le MGC comprend une unité de commande de génération de rapport, une unité de génération d'informations de commande, et une unité d'envoi d'informations de commande, dans lequel :
l'unité de commande de génération de rapport est configurée pour stocker ou générer un paramètre de propriété de rapport RTCP HR, généré, GHRR, et un identificateur, ID, de passerelle média, MG, correspondant, et envoyer le paramètre de propriété GHRR et l'ID DE MG correspondant à l'unité de génération d'informations de commande (512), dans lequel le MGC communique avec la MG en utilisant un protocole H.248/commande de passerelle média, H.248/MeGaCo, ou un protocole de commande de passerelle média, MGCP,
**caractérisé en ce que** la valeur du paramètre de propriété GHRR comprend au moins un élément ou une unité, et chaque élément ou unité est configuré(e) pour décrire un ou un type de rapport RTCP HR qui doit être généré, et est constitué(e) par au moins l'une des informations suivantes : un nom de réception, un nom d'origine, un type de rapport, et un type de sous-bloc ;
l'unité de génération d'informations de commande est configurée pour générer une demande de commande contenant le paramètre de propriété GHRR selon le paramètre de propriété GHRR de l'unité de commande de génération de rapport, et envoyer la demande de commande et l'ID DE MG à l'unité d'envoi d'informations de commande (513) ; et
l'unité d'envoi d'informations de commande est configurée pour envoyer la demande de commande reçue à une MG correspondant à l'ID DE MG (514).
